# EUROPÄISCHE PATENTANMELDUNG

(11) **EP 4 636 276 A1**
(43) Veröffentlichungstag der Anmeldung: **22.10.2025**
(21) Anmeldenummer: 24170536.7
(22) Anmeldetag: 16.04.2024
(51) Int. Cl.: F16F 9/16, A47K 13/12, F16F 9/44, F16F 9/34, F16F 9/516, F16F 9/48

(54) **DÄMPFER FÜR EINE DREHBEWEGUNG, INSBESONDERE VON TOILETTENDECKELN ODER -SITZEN**

(71) Anmelder: Geberit International AG, 8645 Jona (CH)
(72) Erfinder: Kosarnig, Rolf, 8630 Rüti (CH)
(74) Vertreter: Szynka Smorodin Patentanwälte Partnerschaft mbB

(57) **Zusammenfassung**

Dämpfer für eine Drehbewegung, insbesondere von Toilettendeckeln oder sitzen, um eine Drehachse, mit einem viskosen Dämpfungsmedium, zwei relativ zueinander beweglichen Dämpferelementen, deren Relativbewegung zu einer Verdrängung des Dämpfungsmediums führt und das Dämpfungsmedium durch einen Strömungsweg drängt, und einem in einem Strömungsweg des Dämpfungsmediums vorgesehenen Ventilelement, das strömungsrichtungsabhängig von dem Dämpfungsmedium bewegt werden kann und damit strömungsrichtungsabhängig eine zur Verringerung des Gesamtströmungswiderstands des Dämpfungsmediums vorgesehene Bypassöffnung in einer der Strömungsrichtungen des Dämpfungsmediums mehr und in der anderen Strömungsrichtung weniger freigibt, dadurch gekennzeichnet, dass das Ventilelement ein strömungsrichtungs-abhängig beweglicher Ventilkörper ist und durch ein separat zu dem Ventilelement vorgesehenes Federelement elastisch beaufschlagt ist.

## Beschreibung

Die vorliegende Erfindung bezieht sich auf einen Drehdämpfer, also eine Einrichtung zur Dämpfung von Drehbewegungen um eine Drehachse. Ein solcher Dämpfer kann insbesondere eingesetzt werden zur Dämpfung der Drehbewegung von Toilettendeckeln oder Toilettensitzen, die auf einer Toilette montiert sind. Zum Beispiel kann damit ein zu heftiges Anschlagen am Ende einer Absenkbewegung vermieden werden.

Solche Dämpfer sind grundsätzlich vorbekannt und in allgemeinem Gebrauch. Sie weisen regelmäßig ein Gehäuse auf, aus dem ein zapfenartiges Teil herausragt, wobei das Gehäuse mit einem Vorrichtungsteil und der Zapfen mit einem anderen hinsichtlich der Drehbewegung zu koppeln sind. Eine Relativbewegung führt zu einer Verdrängung eines Viskosedämpfungsmediums in dem Gehäuse, was mit einem die eigentliche Dämpfungswirkung erzeugenden und viskositätsbedingten Strömungswiderstand des Dämpfungsmediums verbunden ist.

Für die beschriebene Verdrängung ist die Relativbewegung zweier Dämpferelemente verantwortlich, von denen eines mit dem Gehäuse gekoppelt (oder integriert) ist und das andere mit dem erwähnten Zapfen oder einem anderen separat vom Gehäuse greifbaren und in der Regel aus diesem herausstehenden Teil. Bei dieser Relativbewegung wird das Dämpfungsmedium durch einen Strömungsweg gedrängt und erzeugt dabei infolge seiner Viskosität einen Strömungswiderstand.

Es ist grundsätzlich vorbekannt, den Dämpfer diesbezüglich einstellen zu können. Dementsprechende Einstellelemente sind im Regelfall von außen zugänglich und weisen hierzu z. B. einen Werkzeugeingriff auf. Insbesondere sind drehbare Einstellelemente vorbekannt, mit denen ein für die Dämpfungswirkung wesentlicher Strömungsquerschnitte in dem Strömungsweg verändert werden kann.

Die EP 4 083 466 A1 der Anmelderin schlägt auf dieser Grundlage einen Dämpfer mit einem drehbaren Einstellelement vor. Dieses Dokument wird als nächstliegender Stand der Technik betrachtet, wobei der vorliegenden Anmeldung nicht zwingend eine Einstellbarkeit des Dämpfers zu Grunde liegt.

Auf dieser Grundlage lautet die Aufgabe, einen verbesserten Drehdämpfer, insbesondere für Toilettendeckel oder -sitze anzugeben.

Die Erfindung richtet sich auf einen Dämpfer für eine Drehbewegung, insbesondere von Toilettendeckeln oder -sitzen, um eine Drehachse, mit einem viskosen Dämpfungsmedium, zwei relativ zueinander beweglichen Dämpferelementen, deren Relativbewegung zu einer Verdrängung des Dämpfungsmediums führt und das Dämpfungsmedium durch einen Strömungsweg drängt, und einem in einem Strömungsweg des Dämpfungsmediums vorgesehenen Ventilelement, das strömungsrichtungsabhängig von dem Dämpfungsmedium bewegt werden kann und damit strömungsrichtungsabhängig eine zur Verringerung des Gesamtströmungswiderstands des Dämpfungsmediums vorgesehene Bypassöffnung in einer der Strömungsrichtungen des Dämpfungsmediums mehr und in der anderen Strömungsrichtung weniger freigibt, dadurch gekennzeichnet, dass das Ventilelement ein strömungsrichtungsabhängig beweglicher Ventilkörper ist und durch ein separat zu dem Ventilelement vorgesehenes Federelement elastisch beaufschlagt ist.

Bevorzugte Ausgestaltungen sind Gegenstand der abhängigen Ansprüche, wobei sich die Erfindung auch auf eine vorteilhafte Verwendung und auf eine mit einem erfindungsgemäßen Dämpfer ausgestaltete Toilettengarnitur richtet.

Die vorliegende Erfindung geht also von einem Ventilelement im Strömungsweg zur richtungsabhängigen Veränderung des Dämpfungswiderstands aus, nämlich durch Öffnen und Verengen oder Schließen einer Bypassöffnung. Das an sich ist bereits aus der zitierten älteren Anmeldung bekannt.

Die Bypassöffnung verringert den Strömungswiderstand des Strömungswegs insgesamt deutlich und verringert damit den Dämpfungsgrad. Zum Beispiel kann es gewünscht sein, einen Toilettensitz oder -deckel gegen einen relativ geringen Dämpfungswiderstand anheben zu können bei gleichzeitiger Gewährleistung einer ausreichenden Dämpfung der Absenkbewegung.

Wenn die Bypassöffnung in der einen Strömungsrichtung nicht vollständig verschlossen, sondern lediglich deutlich verengt wird, führt dies zu analogen technischen Konsequenzen und ist daher inbegriffen. Umgekehrt muss das Ventilelement in der anderen Strömungsrichtung nicht zwingend in eine genau definierte andere Position bewegt werden.

In einer besonders einfachen Ausgestaltung ist das Ventilelement ein Einwegeventil, das sich strömungsrichtungsabhängig öffnet oder schließt und in dem durch die Bypassöffnung führenden Anteil des Strömungswegs vorgesehen ist.

Konkret schlägt die schon zitierte EP 4 083 466 A1 als Ventilelement einen Elastomer-O-Ring vor. Im Unterschied dazu ist im vorliegenden Fall eine Ausgestaltung mit einem Ventilkörper einerseits und einem separat dazu vorgesehenen Federelement andererseits vorgesehen. Dabei bewegt sich der Ventilkörper strömungsrichtungsabhängig, was auch für den O-Ring aus der zitierten Anmeldung gilt, ist aber im Unterschied dazu durch ein separates Federelement elastisch beaufschlagt. Die elastische Beaufschlagung dient zur Rückstellung und der Ventilkörper ist dementsprechend gegen eine durch das Federelement aufgebrachte elastische Rückstellkraft beweglich. Vorzugsweise erfolgt die Bewegung gegen diese elastische Kraft durch das strömende Dämpfungsmedium in einer bestimmten Richtung selbst.

Erfindungsgemäß lassen sich nunmehr der Ventilkörper und das dazu separate Federelement unabhängig voneinander optimieren. Insbesondere ist eine unterschiedliche Materialwahl möglich und es wird für den Ventilkörper vorzugsweise ein nichtelastomeres Material, insbesondere ein Kunststoff, verwendet. Damit können bspw. Eigenschaften einer Fläche des Ventilkörpers verbessert werden, die in der geschlossenen Position an einer anderen Fläche dichtender Weise anliegt. Diese Ventilkörperfläche kann zum Beispiel glatter oder formstabiler als eine Oberfläche eines Elastomer-O-Rings gewählt werden. Es lassen sich auch bestimmte geometrische Formen des Ventilkörpers und, wenn dieser ringförmig ist, konkret seines Profils realisieren. Ferner können der Ventilkörper einerseits und das Federelement andererseits unabhängig voneinander im Hinblick auf ihre Nachgiebigkeit bzw. Formstabilität ausgelegt werden. Schließlich kann der Ventilkörper eigenständig im Hinblick auf die zu erwartenden zahlreichen Bewegungen auf Dauerhaftigkeit optimiert werden, was seine Integrität an sich (in Anbetracht der hohen typischen Fluiddruckwerte), aber auch seine Oberflächenqualität betrifft.

Erfindungsgemäß ist ferner, wie in der zitierten EP 4 083 466 A1, ein drehbares Einstellelement vorgesehen, das eine durch die Drehung des Einstellelements verfahrbare Einstellöffnung aufweist. Dabei müssen der die Öffnung aufweisende Teil und das übrige Einstellelement nicht zwingend einstückig ausgestaltet sein, aber hinsichtlich der Drehbewegung gekoppelt sein. Die Einstellöffnung ist in dem Strömungsweg angeordnet und kann durch ihre Verfahrbewegung einen Strömungsquerschnitt verändern. Dazu überlappt die Einstellöffnung mit einer Abdeckkante. Die Abdeckkante überdeckt also einstellungsabhängig einen unterschiedlich gro-ßen Anteil der Einstellöffnung, und durch die Drehung wird dieser Anteil, also das Ausmaß der Überlappung, verstellt.

Zum Beispiel kann die Abdeckkante eine Begrenzungskante (oder die Kombination einer Mehrzahl Begrenzungskanten) einer weiteren Öffnung in dem Strömungsweg sein, die unmittelbar zu der Einstellöffnung benachbart ist.

Die Drehbarkeit kann dabei relativ zu dem einen Dämpferelement oder dem anderen Dämpferelement vorgesehen sein; entscheidend ist nur, dass sich die Drehbarkeit auf die Veränderung der beschriebenen Überlappung auswirkt.

Im Stand der Technik sind vorwiegend Lösungen bekannt, bei denen ein drehbares Einstellelement bei seiner Drehung eine axiale Verschiebung erfährt, indem es nämlich in einem Gewinde geführt ist und wie eine Schraube verstellt wird. Dadurch wirkt sich statt der beschriebenen Einstellöffnung eine axiale Verschiebung einer Stirnfläche des Einstellelements auf einen Strömungsquerschnitt aus.

Die vorliegende Lösung erlaubt verschiedene und je nach Anwendungsfall unterschiedlich wichtige Gestaltungsmöglichkeiten. Einerseits kann die Einstellöffnung radial von der Drehachse des Einstellelements, die in meisten Fällen mit der Drehachse des Dämpfers übereinstimmt, beabstandet werden, wodurch sich ein größerer Gestaltungsspielraum ergibt.

Ferner kann eine axiale Bewegung des Einstellelements vermieden werden, weil sie für die Einstellung nicht erforderlich ist (wenngleich sie möglich ist). Dann ist also die Drehung eine reine Drehung ohne axiale Komponente, also keine Schraubenbewegung. Dementsprechend verändert sich das Einstellelement auch von außen gesehen hinsichtlich seiner axialen Position nicht und bleibt z. B. hinsichtlich der Bedienung axial an der gleichen Stelle. Es tritt z. B. nicht weiter in ein Bauteil des Dämpfers, in dem es aufgenommen ist, hinein oder aus diesem heraus. Außerdem können bei einer Fehlbedienung das Herausfallen des Einstellelements und damit Undichtwerden des Dämpfers vermieden werden, wie es bei gewindegeführten Einstellelementen nach dem Stand der Technik möglich ist.

Gemäß einer bevorzugten Ausgestaltung kann die Einstellöffnung in einem Umkehrbereich des Strömungswegs angeordnet werden. Dieser Strömungsweg verbindet dabei zwei Volumina, von denen eines durch die Relativbewegung bzw. Verschiebung verkleinert und das andere vergrößert wird, wobei bei dieser Ausgestaltung der Strömungsweg einen zentrischen axialen Teil aufweist. Die Einstellöffnung liegt dann zwischen diesem axialen Teil des Strömungswegs und einem der beiden Volumina, welches radial weiter außen liegt. Das Dämpfungsmedium kann also über den axialen Teil der Einstellöffnung zugeführt werden (oder umgekehrt). Die beiden Volumina liegen vorzugsweise in axialer Hinsicht beidseits des verschobenen Dämpferelements und dementsprechend liegt eines der beiden näher an der Einstellöffnung und wird über diese mit dem axialen Strömungswegteil verbunden. Zur Veranschaulichung wird auf das Ausführungsbeispiel verwiesen.

Bei dieser Ausgestaltung erlaubt die radial aus der Achse versetzte Position der Einstellöffnung eine Nutzung der Achsposition für den axialen Teil des Strömungswegs.

Vorteilhafterweise ist die Bypassöffnung im offenen Zustand parallel geschaltet zu der Einstellöffnung des Einstellelements. Im offenen Zustand der Bypassöffnung bzw. des durch diese führenden Anteils des Strömungswegs ist die Einstellöffnung damit weitgehend außer Funktion gesetzt, sodass die Einstellung über das Einstellelement in diesem Sinn die stärker gedämpfte Drehrichtung des Dämpfers betrifft.

Bei einer weiteren bevorzugten Ausgestaltung folgt der bereits beschriebenen Einstellöffnung eine Vorratskammer für Dämpfungsmedium nach. Mit "Nachfolgen" ist hier gemeint, dass die Vorratskammer unmittelbar an die Einstellöffnung anschließt bzw. dazwischen keine hinsichtlich des Strömungswiderstands des Dämpfungsmediums relevante Verengung existiert. Ferner nimmt dies auf diejenige Strömungsrichtung Bezug, in der die durch die Einstellöffnung einstellbare Dämpfungswirkung erfolgt (und nicht die z. B. durch die zuvor diskutierte Bypassöffnung mit einem deutlich geringeren Strömungswiderstand versehene Richtung).

Diese Vorratskammer hat die Funktion, eine gewisse Menge des Dämpfungsmediums zu bevorraten, sodass durch die Einstellöffnung in deren Dämpffunktion hindurch gezwängtes Dämpfungsmedium mit in der Vorratskammer bevorratetem Dämpfungsmedium zusammentrifft. Typischerweise zeigt nämlich das Dämpfungsmedium die Eigenschaft, nach dem durch ein entsprechendes Druckgefälle erzwungenen Durchtritt durch enge Stellen, insbesondere die Einstellöffnung, vorübergehend eine niedrigere Viskosität zu haben als zuvor. Dann könnte bei einer Bewegung über eine gewisse Strecke, insbesondere einer durch eine größere Kraft beaufschlagten Bewegung, stromabwärts von der Einstellöffnung der Strömungswiderstand dortiger Teile des Strömungswegs absinken. Die beschriebene Vorratskammer wirkt dem dadurch entgegen, dass das durch die Einstellungsöffnung hindurchgetretene Dämpfungsmedium mit anderem Dämpfungsmedium vermischt wird.

Insbesondere kann die Vorratskammer eine z. B. trichterartige Verbreiterung eines ungefähr radial verlaufenden Kanals im Strömungsweg sein, wie das Ausführungsbeispiel zeigt.

Die Einstellöffnung selbst kann an einer an diesen Kanal, insbesondere dessen Verbreiterung, anschließenden Vertiefung in einer Außenfläche desjenigen Dämpferbauteils vorliegen, das den Kanal enthält (oder auch eines unmittelbar benachbarten Bauteils). Vorzugsweise handelt es sich um eine Vertiefung einer zylindrischen Außenfläche eines Dämpferbauteils. Das Ausführungsbeispiel veranschaulicht auch dies. Eine solche Vertiefung lässt sich gut in kleinen Dimensionen herstellen und hat den Vorteil, dass sich durch Nachbearbeitung z. B. eines Spritzgusswerkzeugs oder Austauschen eines kleinen Teils eines mehrteiligen Spritzgusswerkzeugs die Maße einer solchen Vertiefung nach einer Erprobung oder zur Anpassung an eine neue Einsatzsituation geringfügig verändern lassen. Damit kann produktionsseitig zusätzlich zu der erfindungsgemäßen Einstellmöglichkeit eine Anpassung der Dämpfungseigenschaften (jedenfalls in der hier relevanten Richtung) vorgenommen werden.

Bei einer weiteren Ausgestaltung dieser Vertiefung hat diese eine sich mindestens in einer Richtung verjüngende Form, und zwar von dem Kanal ausgehend schmaler werdend. Die Richtung, in der der Begriff "schmal" gilt, ist dabei senkrecht zu der Richtung der Relativbewegung der Dämpferelemente (und natürlich senkrecht zur radialen Richtung). Von dem Kanal ausgehend in Richtung der Relativbewegung nimmt die Schmalheit zu. Vorzugsweise wird die Vertiefung dabei außerdem flacher (dies bezogen auf die radiale Richtung).

Die Überlappung mit der Abdeckkante nimmt (bei Drehung des Einstellelements) in der Relativbewegungsrichtung der Dämpferelemente zu, sodass also durch die zunehmende Überlappung nurmehr schmalere und flachere Teile der Vertiefung frei bleiben. Dementsprechend wird durch die Form der Vertiefung bedingt gewissermaßen ein nichtlineares Ansprechen der Einstellmöglichkeit erzielt. Insbesondere lässt sich das Ansprechverhalten in dem zuvor beschriebenen Sinn durch eine Veränderung der Vertiefung auch noch anpassen.

Vorzugsweise weist der Dämpfer ein erstes Dämpferelement auf, welches einen ersten Teil in dem Gehäuse und einen mit dem ersten Teil im Rotationssinn fest verbundenen zweiten Teil außerhalb des Gehäuses aufweist und mit dem ersten und dem zweiten Teil relativ zu dem Gehäuse um die Drehachse drehbar ist, sowie ein zweites Dämpferelement, welches bezüglich Drehungen um die Drehachse fest mit dem Gehäuse gekoppelt und mit dem ersten Dämpferelement so gekoppelt ist, dass eine Drehung des ersten Dämpferelements relativ zu dem Gehäuse zu einer axialen Verschiebung des zweiten Dämpferelements relativ zu dem ersten Dämpferelement und einer Verdrängung des Dämpfungsmediums entlang dem Strömungsweg in dem Gehäuse durch das zweite Dämpferelement führt, wobei das zweite Dämpferelement mittels eines Gewindeeingriffs mit dem ersten Dämpferelement gekoppelt und zumindest insoweit radial in dem ersten Dämpferelement aufgenommen ist, dass der Gewindeeingriff in dem ersten Dämpferelement vorliegt, und dass der Gewindeeingriff und die dadurch bewirkte Verdrängung des Dämpfungsmediums durch das zweite Dämpferelement bidirektional wirken.

Bei dieser Dämpfervariante wird also aus der Drehung der beiden Dämpferelemente relativ zueinander eine axiale Verschiebung des zweiten Dämpferelements relativ zu dem ersten erzeugt. Dabei erfolgt dies über einen Gewindeeingriff zwischen den beiden Dämpferelementen, und zwar sozusagen radial (in Bezug zu der Drehachse) zwischen diesen beiden Dämpferelementen. In anderen Worten soll das zweite Dämpferelement zumindest insoweit radial in dem ersten Dämpferelement aufgenommen sein (sodass diese also, radial betrachtet, überlappen), dass der Gewindeeingriff in diesem aufgenommenen Bereich und damit in dem ersten Dämpferelement (also im Bereich der Überlappung) vorliegt.

Es geht hier also nicht um die Wechselwirkung zwischen axial benachbarten helixförmigen Stirnflächen, sondern um einen im radialen Sinn äußeren Bereich des zweiten Dämpferelements und einen inneren Bereich des ersten Dämpferelements, die in Gewindeeingriff miteinander stehen.

In dieser Form kann eine robuste und konstruktiv nicht allzu komplizierte mechanische Lösung für die Erzeugung der Verdrängung des Dämpfungsmediums realisiert werden.

Insbesondere kann ein solcher Gewindeeingriff in zwei Richtungen zu einer axialen Verschiebung führen, während es bei den vorbekannten axialen Stirnseiten und deren Helixformen jeweils nur zu Kräften in eine Richtung kommen kann. Wenn dabei eine Wechselwirkung in zwei Richtungen gewünscht ist, müssen die Strukturen gewissermaßen verdoppelt werden. Im Stand der Technik gibt es stattdessen auch Lösungen, bei denen eine zusätzliche Feder vorgesehen ist und damit gewisserma-ßen die Kraft in der zweiten Richtung als Vorspannung vorgibt. Demgegenüber ist die Erfindung insoweit einfacher, als der Gewindeeingriff an sich bidirektional wirkt.

Bevorzugterweise ist das zweite Dämpferelement jedenfalls hinsichtlich des Gewindeeingriffs in dem ersten Dämpferelement aufgenommen, sodass also das erste Dämpferelement in diesem Bereich radial außerhalb des zweiten liegt. Da das erste Dämpferelement über den zweiten Teil außerhalb des Dämpfergehäuses verfügt (gewöhnlich ein zylindrischer Zapfen mit Abflachungen an zueinander entgegengesetzten Seiten), werden also die Kräfte über das radial äußere Teil in den Gewindeeingriff eingeleitet. Damit sind hier die Hebellängen relativ groß und ist das erste Dämpferelement im Hinblick auf die Übertragung dieser Kräfte besonders robust.

Grundsätzlich kann der Gewindeeingriff schon dadurch erfolgen, dass nur an einem der beiden Dämpferelemente ein Gewinde, also ein Satz aus mindestens zwei helixförmigen Flächen, vorgesehen ist. Bei dem anderen Dämpferelement kann dann z. B. nur ein einfacher Vorsprung (mit z. B. runder Grundfläche) oder eine Ausnehmung vorgesehen sein, wobei der Vorsprung zwischen die beiden helixförmigen Flächen des anderen Dämpfungselements bzw. die beiden helixförmigen Flächen in die Ausnehmung eingreifen können.

Bevorzugt ist allerdings, dass beide Dämpferelemente jeweils zwei helixförmige Flächen aufweisen und es insoweit einen wechselseitigen Eingriff von Gewinden ineinander gibt.

Dabei müssen allerdings die Gewindelängen auf beiden Seiten nicht die gleichen sein und kann es beispielsweise bei einem der Dämpferelemente nur einen kurzen Vorsprung mit allerdings zwei helixförmigen Flächen an seinen Seiten geben, während eine Rille als das Gegenstück des anderen Dämpfungselements in Umfangsrichtung viel länger ausgebildet ist.

Außerdem müssen die beiden helixförmigen Flächen eines Dämpferelements nicht zwingend verschieden sein, sie können also durch den Verlauf einmal um den Umfang miteinander verbunden sein. In anderen Worten bezieht sich die Zahl 2 auf die Betrachtung an einer bestimmten Umfangsstelle.

Die helixförmigen Flächen, also Gewinde, an beiden Dämpferelementen sorgen für eine Verteilung der Kräfte über größere Flächen und damit eine robustere Lösung.

Vorzugsweise ist das zweite Dämpferelement mindestens bei einem Teil der durch die axiale Verschiebung auftretenden Positionen vollständig radial in dem ersten Dämpferelement aufgenommen. Dann gilt diese Aufnahme also nicht nur für einen axialen Abschnitt des zweiten Dämpferelements. In dieser Form kann eine besonders kompakte Konstruktion erreicht werden.

Weiterhin ist bevorzugt, dass es nicht etwa zusätzlich zu dem beschriebenen Gewindeeingriff noch eine weitere Wechselwirkung zwischen helixförmigen Formflächen an axialen Stirnseiten des ersten und zweiten Dämpferelements gibt. Vorzugsweise beschränkt sich also die mechanische Wechselwirkung zwischen den beiden Dämpferelementen auf den beschriebenen Gewindeeingriff, wobei dieser natürlich mehrfach vorliegen kann.

Vorzugsweise erstrecken sich die durch die helixförmigen Flächen gebildeten Gewindeabschnitte über einen nicht zu kleinen Drehwinkel (in Bezug auf die Drehachse), und zwar vorzugsweise von mindestens 50°. Damit wird eine verbesserte Stabilität und insgesamt eine robuste Ausführung des Dämpfers erreicht. Bevorzugte Untergrenzen sind ferner 60°, 70° und sogar 80°.

Diese Winkelerstreckung muss dabei nicht für die Gewindeabschnitte beider Dämpferelemente gleich sein. Beispielsweise erstrecken sich die Gewindeabschnitte des inneren zweiten Dämpferelements bei dem weiter unten beschriebenen Ausführungsbeispiel über gut 90°, aber diejenigen des äußeren ersten Dämpferelements über deutlich mehr als 200°, weil sie die Gesamtdrehbewegung des Dämpfers abdecken und zusätzlich in allen Positionen mit den inneren Gewindeabschnitten vollständig oder jedenfalls weitgehend überlappen sollen. Das bedeutet im Fall des Ausführungsbeispiels einen Gesamtdrehwinkel von 120° zuzüglich gut 90° für das zweite Dämpferelement und damit gut 210°. In diesem Sinn beziehen sich die obigen Mindestangaben auf die jeweilig kürzeren Gewindeabschnitte der Dämpferelemente.

Eine weitere oder alternative bevorzugte Steuerungsmöglichkeit des erfindungsgemäßen Dämpfers ist nicht richtungsabhängig, sondern drehwinkelabhängig, betrifft also einen Teil des Gesamtdrehwegs des Dämpfers. In einem Endbereich dieses Gesamtdrehwegs soll die Dämpfungswirkung dementsprechend verstärkt werden, und zwar indem eine weitere Öffnung in dem Strömungsweg verengt wird und damit zu der Dämpfungswirkung der Einstellöffnung als weiterer maßgeblicher Strömungswiderstand hinzutritt.

Dies wird vorteilhafterweise dadurch realisiert, dass das zweite Dämpferelement im Rahmen seiner axialen Verschiebebewegung in einem Endbereich dieser Bewegung eine Durchtrittsöffnung des Dämpfungsmediums durch zunehmende Überlappung verengt oder möglicherweise auch ganz verschließt. In letztgenanntem Fall könnte dies das Dämpfungsmedium durch einen parallel geschalteten Strömungsweganteil mit entsprechend hohem Strömungswiderstand zwingen.

Jedenfalls kann in solcher Weise z. B. dafür gesorgt werden, dass bei einer an sich eher dämpfungsarmen oder dämpfungsfreien Anhebebewegung eines Toilettendeckels oder -sitzes in der Schlussphase kurz vor dem Anschlagen eine verstärkte oder zunehmende Dämpfung erfolgt. In diesem Fall würde also diese zweite Steuerungsmöglichkeit zu der richtungsabhängigen und zuvor beschriebenen hinzutreten.

Die weiter oben erläuterte Durchtrittsöffnung kann sich bei einer vorteilhaften Ausgestaltung an den bereits zuvor erwähnten axialen Teil des Strömungswegs des Dämpfungsmediums anschließen. Sie liegt damit in Bezug auf diesen axialen Teil des Strömungswegs gewissermaßen entgegengesetzt zu der Einstellöffnung (ist dabei aber durchaus nicht symmetrisch zu dieser). Das Ausführungsbeispiel veranschaulicht diesen Aspekt.

Es könnte z. B. die Endphase einer Schließbewegung stärker gedämpft werden, um einerseits ein besonders sanftes Anschlagen in der Endposition der Schließbewegung zu erreichen, andererseits die Schließbewegung an sich damit nicht allzu sehr zu verlangsamen. Dementsprechend gibt es dann eine entsprechende Durchtrittsöffnung (im Ausführungsbeispiel zwei) im anderen Endbereich der Bewegung des zweiten Dämpferelements. Diese Durchtrittsöffnung verringert also die Dämpfung in der Anfangsphase der Schließbewegung ganz erheblich, wird dann aber in der Endphase geschlossen, sodass die eigentliche Dämpfung durch die Einstellöffnung zum Tragen kommt. Die obige Grundidee einer Durchtrittsöffnung, die in einer Endphase einer Bewegung des zweiten Dämpferelements von diesem abgedeckt wird, lässt sich dementsprechend auch doppelt ausführen.

Die beschriebene Einstellmöglichkeit ist baulich besonders flexibel, sie kann zudem sehr sensibel realisiert werden. Bei einer bevorzugten Nutzung dieses Aspekts der Erfindung wird eine gewisse Zahl vorzugsweise baugleiche Dämpfer unter Nutzung der Einstellmöglichkeit an die individuelle Situation angepasst. Insbesondere betrifft dies unterschiedliche Massen von Toilettensitzen oder -deckeln (oder sonstwie in ihrer Bewegung gedämpften Teilen). Es kann also mit einem oder einer kleinen Zahl Bautypen des Dämpfers eine größere Zahl unterschiedlicher solcher Massen sinnvoll abgedeckt werden, indem die Einstellmöglichkeit zur Individualisierung genutzt wird.

Im Besonderen betrifft dies eine Mehrzahl baugleicher Dämpfer mit gleichem Dämpfungsmedium, z. B. gleichem Fetttyp. Konventionellerweise wird nämlich zwischen unterschiedlichen Dämpfungsmedien unterschieden, um auf unterschiedliche Massen der zu dämpfenden Teile Rücksicht zu nehmen. Es ist aber viel einfacher, eine kleine Zahl Dämpfertypen oder auch nur einen einzigen Dämpfertyp mit einer kleinen Zahl unterschiedlicher Dämpfungsmedien-Typen oder sogar nur einem einzigen Typ Dämpfungsmedium zu befüllen und nur die Einstellmöglichkeit zur Anpassung zu nutzen.

Weiter oben wurde bereits ausgeführt, dass der Ventilkörper vorzugsweise aus einem nicht-elastomeren Material hergestellt wird. Dies bedeutet nicht zwingend, dass das Federelement ein Elastomer-Federelement sein muss, wobei es aber bevorzugt ein solches ist. Grundsätzlich kommen z. B. auch Federelemente aus federnden Metallstrukturen in Betracht.

Die ebenfalls weiter oben schon angesprochene Freiheit in der geometrischen Ausgestaltung des Ventilkörpers kann bei einer besonderen Ausgestaltung ein Rohrstück des Ventilkörpers betreffen, an das sich wiederum vorzugsweise ein gegenüber dem Rohrstück verbreitertes Element anschließt. Dabei sind die beiden Elemente bevorzugt einstückig miteinander ausgebildet.

Mit dem Rohrstück kann der Ventilkörper im montierten Zustand des Dämpfers in eine hier als Kanalöffnung bezeichnete Öffnung des bereits behandelten Einstellelements eingreifen, wobei diese Kanalöffnung wiederum mit der Einstellöffnung des Einstellelements kommuniziert. Dementsprechend strömt Dämpfungsmedium durch die Kanalöffnung. Der Ventilkörper weist eine Durchgangsöffnung in dem Rohrstück auf, sodass insgesamt ein Strömungspfad gebildet ist, in dem die Einstellöffnung, die Kanalöffnung und die Durchgangsöffnung liegen. Der Ventilkörper dient dabei vorzugsweise zum Verschließen oder Verengen zur Abdichtung dieses Strömungswegs oder eines wesentlichen Teils davon, und zwar durch Anlage des Ventilkörpers an einer Gegenfläche (oder Annäherung daran).

Bei einer anderen günstigen Ausgestaltung des Ventilkörpers weist das Einstellelement des Dämpfers ein Rohrstück auf, wobei der Ventilkörper in dieser Ausgestaltung mit seiner Durchgangsöffnung zur Aufnahme dieses Rohrstücks ausgelegt und dementsprechend auf dem Rohrstück beweglich gehalten ist. Das Rohrstück kommuniziert mit der bereits oben behandelten Einstellöffnung und dementsprechend kann auch bei dieser Ausgestaltung der so gebildete Strömungspfad abgedichtet werden, indem der Ventilkörper an einer Gegenfläche liegt. Hier greift also ein Rohrstück des Einstellelements in den Ventilkörper ein und bei der vorher betrachteten Ausführungsform ist es umgekehrt: Dort greift ein Rohrstück des Ventilkörpers in das Einstellelement ein. Die Ausführungsbeispiele illustrieren dies.

Beide Ausgestaltungen schaffen jeweils eine kompakte und baulich günstige Lösung dafür, mit der erfindungsgemäß schaltbaren Bypassöffnung den durch das Einstellelement einstellbaren Strömungsweg strömungsrichtungsabhängig schalten zu können.

Gemäß einer weiteren Konkretisierung der zuerst beschriebenen Ausgestaltung ist das Federelement als Elastomer-Federelement zwischen einer äußeren Fläche des Ventilkörpers und einer Fläche des Einstellelements vorgesehen und stützt sich zur Beaufschlagung des Ventilkörpers dementsprechend an dem Einstellelement ab. Vorzugsweise handelt sich bei dessen gerade erwähnter Fläche um eine die Kanalöffnung umgebenden Stirnfläche des Einstellelements.

Bei der zweiten Ausgestaltung kann das Elastomer-Federelement ebenfalls zwischen einer Fläche des Ventilkörpers und einer Fläche des Einstellelements vorgesehen sein, wobei es hier vorzugsweise um eine Stirnfläche des Ventilkörpers und eine dieser Stirnfläche in Axialrichtung gegenüberliegende Fläche des Einstellelements geht. Die Fläche des Einstellelements umgibt dabei das Rohrstück. Es wird wieder auf die Ausführungsbeispiele verwiesen.

Andererseits weist der Ventilkörper eine Dichtfläche zur Anlage an einer Gegenfläche auf (also hier nicht zur Anlage an dem Federelement). Bei einer bevorzugten Bauform treten zwischen diesen beiden Flächen relative Drehbewegungen auf, nämlich bei und infolge der Relativbewegungen der Dämpferelemente zueinander.

Bei den beschriebenen relativen Drehbewegungen bewegen sich der Ventilkörper und vorzugsweise auch das Elastomer-Federelement vorzugsweise mit dem Einstellelement mit. Sie sind also in anderen Worten bei den genannten Relativbewegungen relativ zu diesem Einstellelement unbeweglich. Das muss allerdings nicht für Einstellbewegungen des Einstellelements gelten. Im Gegenteil wird sich dabei in vielen Fällen (und im Ausführungsbeispiel) das Einstellelement relativ zu dem Ventilkörper bewegen.

Bei der ersten, weiter oben erläuterten Ausgestaltung des Ventilkörpers ist dessen Dichtfläche von seinem Rohrstück abgewandt und insbesondere an einem gegenüber dem Rohrstück verbreiterten Kragen des Ventilkörpers vorgesehen. Bevorzugt ist dabei die Dichtfläche ebenfalls gegenüber dem Rohrstück verbreitert, hat also bei den hier bevorzugten weitgehend rotationssymmetrischen Gestaltungen einen größeren Radius.

Bei der zweiten dargestellten Ausgestaltung des Ventilkörpers ist seine Dichtfläche eine von seiner Stirnfläche abgewandte Fläche und vorzugsweise eine entgegengesetzte weitere Stirnfläche des Ventilkörpers.

Auch zu diesen beiden Varianten wird auf die Ausführungsbeispiele verwiesen, wobei die Grundidee der Relativbewegungen zwischen der Dichtfläche und der Gegenfläche auch in einem allgemeineren Sinn als in Zusammenhang mit den beiden besonderen Ausgestaltungen des Ventilkörpersgilt. Ganz allgemein erlaubt die Erfindung eine hinsichtlich dieser Drehbewegungen optimierte Gestaltung des Ventilkörpers, und zwar geometrisch und/oder materialtechnisch.

Die mehrfach erwähnte Gegenfläche wiederum ist (unabhängig von der konkreten Ausgestaltung des Ventilkörpers) vorzugsweise eine Fläche eines Achsteils des Dämpfers. Dieser Achsteil kann ganz oder zumindest teilweise in den Dämpferelementen aufgenommen sein. Insbesondere kommt eine dem Einstellelement zugewandte Stirnfläche des Achsteils in Betracht, wie das Ausführungsbeispiel zeigt.

Die Erfindung richtet sich schließlich auch auf eine Toilettengarnitur mit zumindest einem erfindungsgemäßen Dämpfer. Eine Toilettengarnitur bezeichnet dabei mindestens einen Toilettendeckel oder einen Toilettensitz, vorzugsweise beide in Kombination, zur Montage (oder montiert) auf einer Toilette. Dabei findet ein erfindungsgemäßer Dämpfer Einsatz zum Abdämpfen der Drehbewegungen der Garniturteile, wobei vorzugsweise für den Toilettensitz und den Toilettendeckel je ein Dämpfer vorgesehen ist.

Im Folgenden wird die Erfindung anhand von Ausführungsbeispielen näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt:
- Figur 1: eine perspektivische Ansicht einer mit einer erfindungsgemäßen Toilettengarnitur ausgestatteten Toilette, wobei ein Toilettendeckel in vertikaler und zusätzlich halb abgesenkter Position dargestellt ist;
- Figur 2: eine explosionsartige Darstellung eines erfindungsgemäßen Dämpfers in der Toilettengarnitur aus Figur 1, wobei die Einzelteile entlang der Drehachse auseinandergezogen sind;
- Figur 3: eine entlang der Drehachse geschnittene und gleichzeitig perspektivische Ansicht des wesentlichen Teils des Drehdämpfers aus Figur 2;
- Figur 4: einen Ausschnitt aus der Darstellung in Figur 3 vergrößert;
- Figur 5: eine Figur 3 entsprechende Darstellung, jedoch in Seitenansicht senkrecht zur Schnittebene und zur Drehachse;
- Figuren: 6, 7 und 8 Ansichten analog zu Figur 5, jedoch mit veränderten Positionen der Bauteile;
- Figur 9: eine Darstellung analog zu Figur 3, aber mit den Bauteilpositionen gemäß Figur 8;
- Figur 10: eine vergrößerte Darstellung des Einstellelements 12 aus Figur 2 mit etwas veränderter Drehposition gegenüber Figur 2 und
- Figur 11: eine ebenfalls vergrößerte Darstellung des Achsteils 7 aus Figur 2.

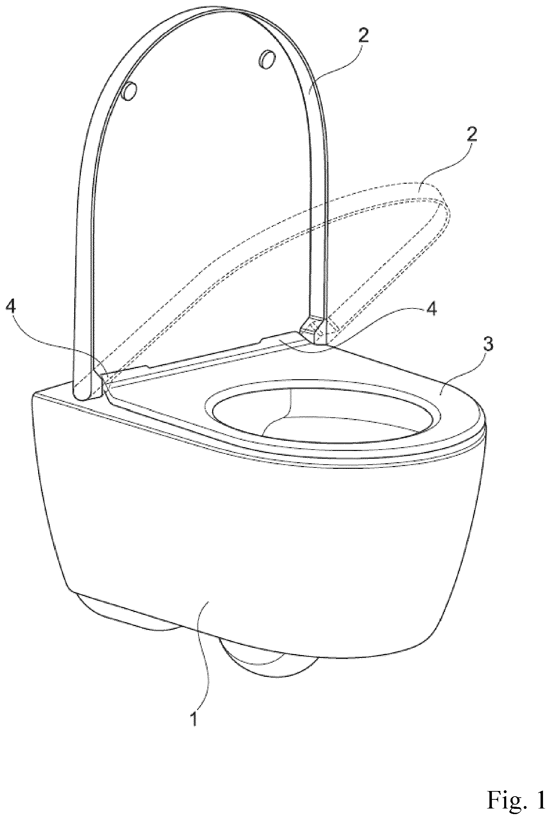

Figur 1 zeigt eine perspektivische Darstellung einer Toilette von vorn links oben. Dabei ist auf einen Toilettenkörper 1 eine Toilettengarnitur montiert, die einen Toilettendeckel 2 und einen Toilettensitz 3 aufweist, die jeweils um eine hinten querliegende Drehachse auf- und zuklappbar sind. Zur Veranschaulichung ist der Toilettendeckel 2 neben der aufrechten Position noch einmal in halb abgesenkter Lage und dabei halbtransparent angedeutet.

Die Toilettengarnitur ist in leicht verdickt erscheinenden Bereichen 4 des Toilettensitzes 3 mit zwei erfindungsgemäßen Dämpfern ausgestattet, auf die anhand der folgenden Figuren näher eingegangen wird und die zum Dämpfen der Drehbewegung des Toilettendeckels 2 und des Toilettensitzes 3 dienen. Dabei ist durch entsprechende drehbare bzw. drehverriegelte Führung/Verbindung dafür Sorge getragen, dass der eine Drehdämpfer nur die Drehbewegung des Toilettendeckels 2 dämpft und gegenüber dem Toilettensitz 3 drehbeweglich ist und der andere Drehdämpfer umgekehrt.

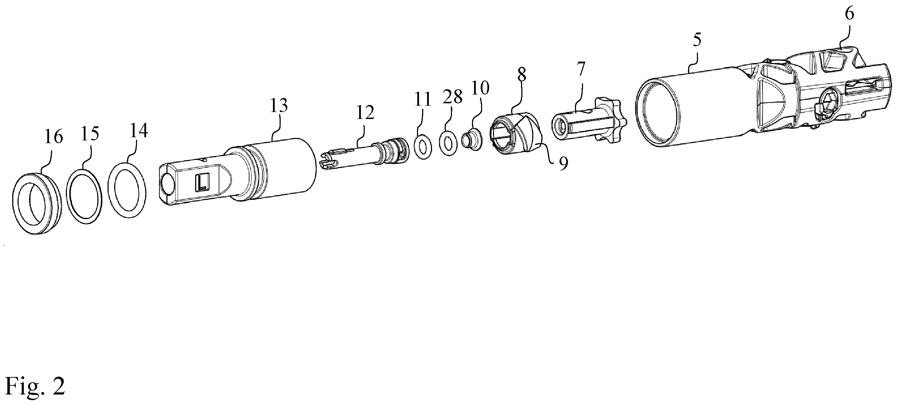

In Figur 2 sieht man einen der Dämpfer mit einer Reihe einzelner Bauteile entlang der Drehachse, wobei hier auf die linke der beiden Positionen 4 in Figur 1 abgestellt wird. Ganz rechts ist ein Gehäuse 5 des Dämpfers zu sehen, das zur linken Seite offen ist und darin einen im Wesentlichen zylindrischen Hohlraum zur Aufnahme der übrigen Teile bietet.

Der ebenfalls dargestellte rechte Teil des Dämpfergehäuses 5 dient zur Befestigung auf einem vertikalen Montagedorn, der auf dem Toilettenkörper 1 aus Figur 1 in an sich konventioneller Weise befestigt ist und das in Figur 2 mit 6 bezeichnete vertikale Loch durchsetzt. Im Übrigen wird zur Illustration verwiesen auf die frühere Anmeldung EP 20 152 653.0 der vorliegenden Anmelderin, was die Details dieser Befestigung angeht. Diese sind für die vorliegende Erfindung nicht wesentlich.

In der Reihenfolge von rechts nach links sieht man im Übrigen ein Achsteil 7, dessen rechtes Ende eine sternähnliche Scheibe mit abgerundeten Spitzen zu einer drehverriegelten formschlüssigen Montage in einer entsprechenden Ausnehmung in der nicht sichtbaren stirnseitigen Endfläche des Hohlraums in dem Gehäuse 5 aufweist. Außerdem hat das Achsteil 7 zwei drehachsenparallele äußere Längsrippen, von denen eine dargestellt ist und die zum formschlüssigen Eingriff (hinsichtlich Drehung) in entsprechende Rillen des links daneben dargestellten Elements 8 dienen. Dieses ist das sogenannte zweite Dämpfungselement 8 und hat ausweislich der Figur einen äußeren Gewindeabschnitt 9, ein weiterer ist in Figur 2 nicht zu sehen und liegt hinter dem Element 8.

Weiter links gibt es einen Ventilkörper 10 und zwei Elastomer-Ringe 11 und 28, auf die noch näher eingegangen wird, sowie ein hülsenstiftartiges Einstellelement 12.

Darauf folgt das sogenannte erste Dämpferelement 13, das gemäß Figur 2 einen rechten zylindrischen ersten Teil zur Aufnahme in dem Gehäuse 5 und einen linken zweiten Teil aufweist, die einstückig miteinander ausgeführt sind. Der zweite Teil des ersten Dämpferelements dient zur Drehmomentübertragung auf das von dem Dämpfer gedämpfte Garniturteil 2 oder 3, wozu die beiden seitlichen Abflachungen dienen. Insoweit ist der Dämpfer ähnlich zu konventionellen Dämpfern aufgebaut.

Noch weiter links erkennt man eine Dichtung 14, eine weitere Scheibe 15 und einen Verschlussdeckel 16.

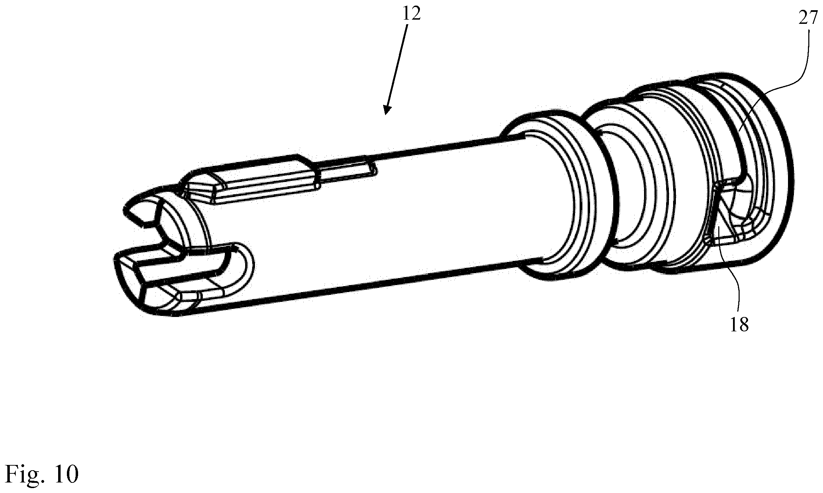

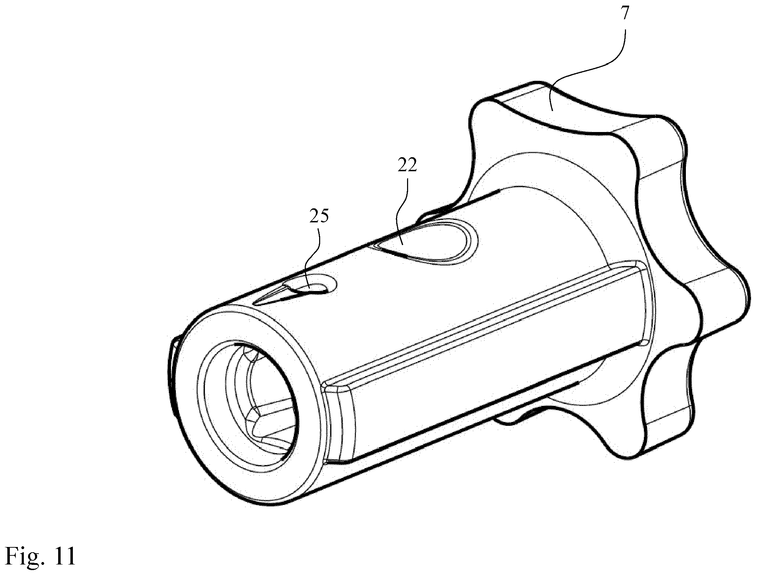

Die Teile 12 und 7 zeigen die Figuren 10 und 11 einzeln und vergrößert.

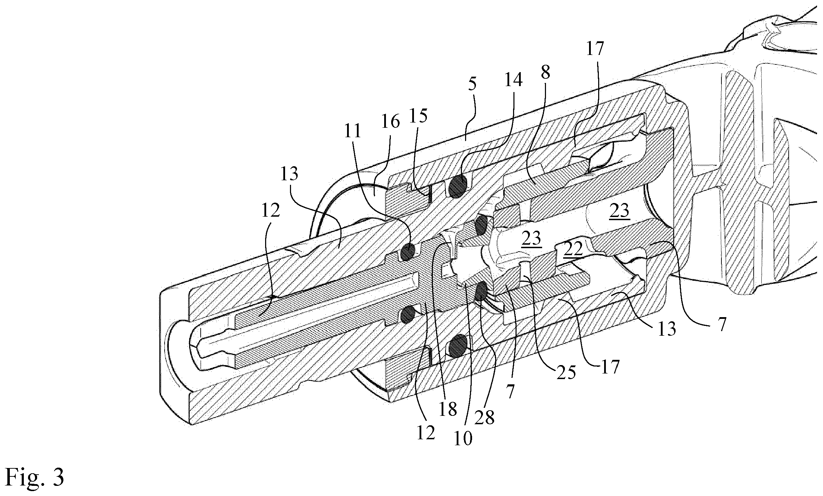

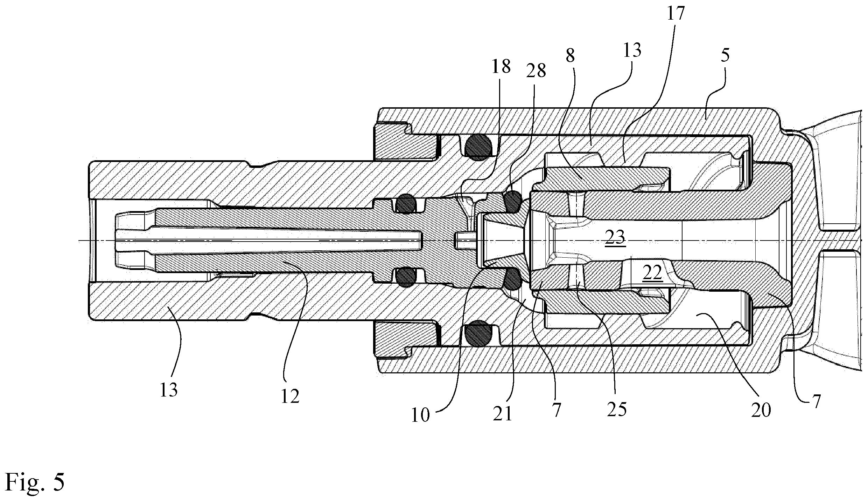

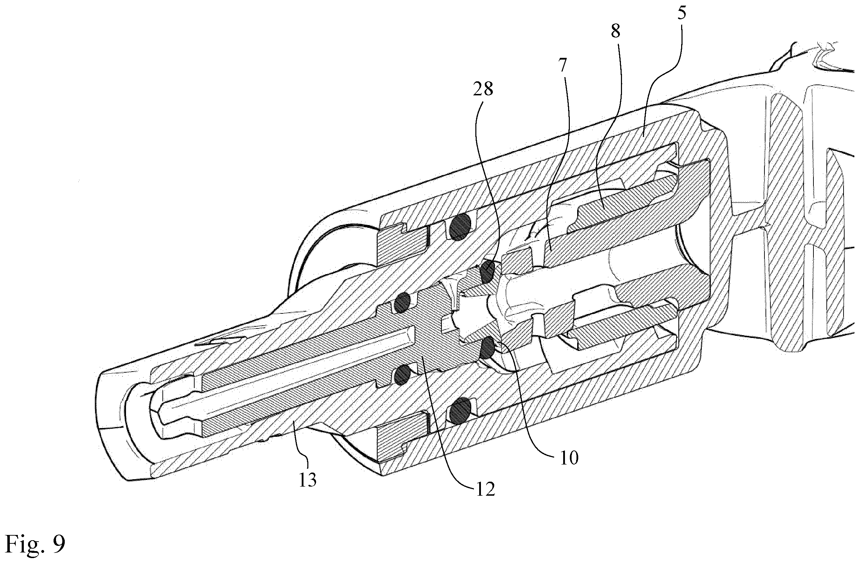

In den Figuren 3 und 4-9 sind diese Elemente in zusammengebautem Zustand dargestellt, wobei nur der rechte Teil des Dämpfergehäuses 5 weggelassen ist. Dabei sind die Figuren 3 und 9 einerseits in einer die Drehachse enthaltenden und in Bezug auf Figur 2 vertikalen Ebene geschnitten, andererseits perspektivisch und damit vergleichbar mit Figur 2. Die Figuren 5-8 sind in der gleichen Schnittebene geschnitten, aber in senkrechter Draufsicht auf die Schnittebene dargestellt, wobei diese Figuren 5-8 im Vergleich miteinander verschiedene Positionen einerseits des ersten Dämpfungselements 13 und des zweiten Dämpferelements 8 und andererseits des Einstellelements 12 zeigen. Hinsichtlich dieser Positionen entsprechen sich die Figuren 3 und 5 einerseits sowie 8 und 9 andererseits.

Zunächst wird das Wechselspiel zwischen dem ersten Dämpferelement 13, dem zweiten Dämpferelement 8 und dem Achsteil 7 erläutert. In den Figuren ist das Gehäuse 5 hinsichtlich der Drehung stationär (so wie auch auf dem Toilettenkörper 1), was wegen der bereits beschriebenen Drehverriegelung durch den Formschlusseingriff auch für das Achsteil 7 gilt. Wegen des ebenfalls bereits beschriebenen Eingriffs von dessen Rippen in die Rillen des zweiten Dämpferelements 8 ist auch das zweite Dämpferelement 8 hinsichtlich der Drehung stationär und lediglich axial verschiebbar. Drehbar wiederum ist das erste Dämpferelement 13.

Der äußere Gewindeabschnitt 9 des zweiten Dämpferelements 8 greift ein in ein Innengewinde in dem ersten Dämpferelement 13, und zwar in dessen ersten Teil. Der entsprechend nach innen vorstehende Gewindeabschnitt ist in den Figuren mit 17 bezeichnet, wobei wegen der Schnittebene der Gewindeabschnitt 9 aus Figur 2 in den Figuren 3 bis 9 nicht zu erkennen ist (er liegt nämlich hinter bzw. vor der Schnittebene). Durch diese Wechselwirkung wird eine Drehbewegung des ersten Dämpferelements 13 in eine axiale Schiebebewegung des zweiten Dämpferelements 8 übersetzt, was sich aus dem Vergleich der Figuren 5-8 (bzw. 3 und 9) ablesen lässt. In der Reihenfolge der Figurennummern handelt sich um eine Anhebebewegung eines Garniturteils, wobei sich das zweite Dämpferelement 8 von links nach rechts bewegt und ein in den Figuren gut erkennbares Volumen 20 axial rechts davon vergrößert und ein anderes Volumen 21 axial links davon verkleinert. In an sich bekannter Weise sind diese Hohlräume mit einem Dämpfungsmedium (einem Spezialfett) hoher Viskosität gefüllt, das dementsprechend aus dem rechten Hohlraum verdrängt wird und über einen Strömungsweg zu dem linken Hohlraum gezwängt wird.

Dabei ist das zweite Dämpferelement 8 gemäß den Figuren vollständig radial innerhalb des ersten Dämpferelements 13, und zwar innerhalb von dessen erstem Teil, aufgenommen. Man erkennt außerdem, dass die Drehmomenteinleitung von dem zweiten Teil des ersten Dämpferelements 13 (in den Figuren links) zu dem ersten Teil (in den Figuren rechts) und von diesem ersten Teil des ersten Dämpferelements 13 zu dem zweiten Dämpferelement 8 (also radial nach innen) bei jeweils relativ großen Radien stattfindet, also unter Berücksichtigung der Hebelwirkung mit begrenzten Kräften bzw. stabilen Strukturen.

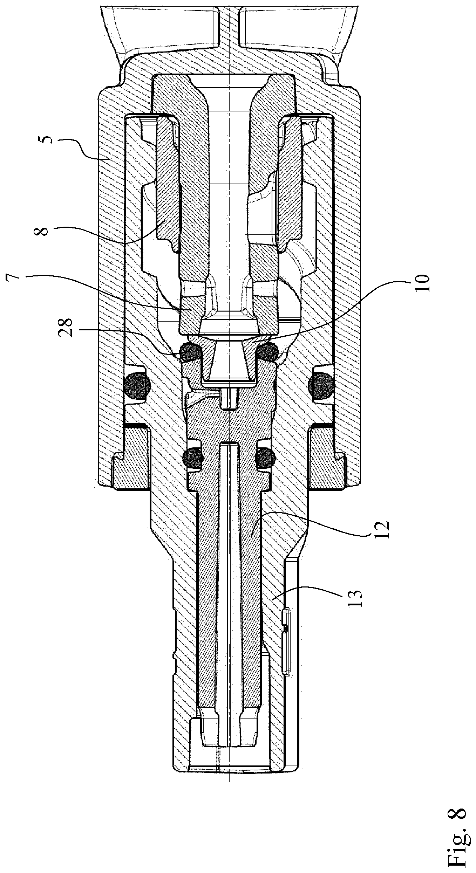

Man erkennt außerdem, z. B. in den Figuren 3 und 5, dass das erste Dämpferelement mit seinem Innengewinde z. B. in Figur 5 auch noch einmal rechts unten in dem ersten Dämpferelement zu sehen ist oder in Figur 8 noch einmal links oben, und daher das äußere Gewindeelement 9 des zweiten Dämpferelements 8 beidseits mit entsprechenden Helixflächen umgreift. Insoweit ist der Gewindeeingriff bidirektional.

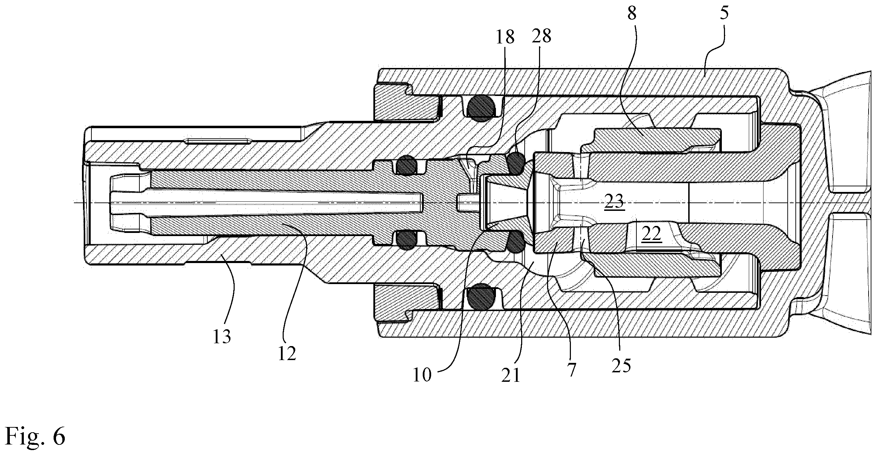

Bei der in den Figuren dargestellten Bewegung wird zunächst, also in dem Stadium von Figur 5 zu Figur 6, das Dämpfungsmedium von dem rechten Volumen 20 ausgehend durch die mit 22 bezeichnete radiale Durchtrittsöffnung in einen zentrischen und axialen Teil 23 des Strömungswegs, nämlich mittig in dem Achsteil 7, gepresst. Von dort fließt es axial weiter nach links zu dem Ventilkörper 10.

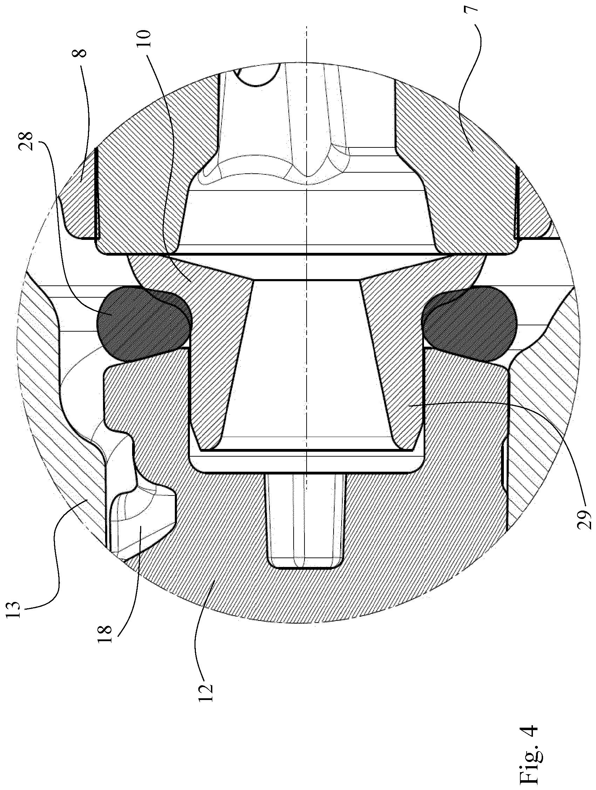

Dessen Lage ist in Figur 4 vergrößert als Ausschnitt dargestellt, wobei die Figuren eine entgegen dem hier beschriebenen Betriebszustand geschlossene Position zeigen. Der Ventilkörper 10 bildet nämlich (mit dem Ring 28) ein Einwegeventil und kann durch die gerade beschriebene Strömung leicht axial nach links verschoben werden, sodass das Dämpfungsmedium sich damit im Sinne einer Bypassöffnung einen ausreichenden Strömungsquerschnitt radial nach außen verschaffen kann. Es gelangt damit in das Volumen 21 links von dem zweiten Dämpferelement 8.

Der ebenfalls noch existierende Weg durch eine zentrische axiale Durchgangsöffnung des Ventilkörpers 10 hindurch nach links und dann radial nach oben spielt bei dieser Bewegungsrichtung keine wesentliche Rolle, weil die Strömungsquerschnitte dort zu klein sind, und wird weiter unten noch näher beschrieben. Bei der umgekehrten Bewegungsrichtung verschließt nämlich der Ventilkörper 10 den gerade erläuterten radialen Weg. Insoweit steuert also der Ventilkörper 10 die sogenannte Bypassöffnung.

Konkret hat der Ventilkörper 10 eine rotationssymmetrische Form bezüglich der Drehachse (in den Figuren horizontal eingezeichnet) und dabei ein Schnittprofil, das einerseits ein Rohrstück 29 mit ganz ungefähr achsparallelen Wänden und andererseits einen von einem rechten Ende des Rohrstücks 28 aus sich schräg nach außen erstreckenden Kragen 30 aufweist. Das Rohrstück 29 und der Kragen 30 verjüngen sich jeweils zu ihren distalen Enden hin und sind am dicksten, wo sie sich treffen. Es handelt sich um ein einstückiges Kunststoff-Spritzgussteil.

Der Kragen 30 hat auf seiner in den Figuren rechten Seite, also auf der zu dem Rohrstück 29 abgewandten Seite, eine gemäß den Figuren als Dichtfläche an einer Gegenfläche anliegende Stirnfläche, nämlich den radial äußersten Teil der nach rechts weisenden Fläche des Kragens 30. Diese Fläche liegt an gegen eine umgekehrt nach links weisende Stirnfläche des Achsteils 7 und kann sich von dieser abheben, wenn von rechts einströmendes Fluid auf die übrige nach rechts weisende Fläche des Kragens 30 eine ausreichende axiale Kraft nach links ausübt.

Das Rohrstück 29 ist axial verschiebbar gehalten in einer Kanalöffnung (ohne Bezugszeichen) des Einstellelements 12, wie die Figuren deutlich zeigen. Diese Kanalöffnung kommuniziert mit der an anderer Stelle noch näher behandelten trichterförmigen Verbreiterung 18, die radial nach außen führt. Außerdem weist das Rohrstück 29 (wie der Name sagt) eine innere Durchgangsöffnung des Ventilkörpers 10 auf, die die Kanalöffnung des Einstellelements 12 auf der linken Seite verbindet mit dem mit 23 bezifferten Innenvolumen des Achsteils 7.

Aus der obigen Darstellung des Ausführungsbeispiels ergibt sich, dass im "Dämpfungsbetrieb", also bei relativen Drehungen zwischen den Dämpferelementen 8 und 13 und damit auch zwischen dem Einstellelement 12 (das während dieser Bewegungen keine zusätzliche Einstellbewegung relativ zu dem Dämpferelement 13 vollzieht) und dem Achsteil 7 (das gegenüber dem Gehäuse 5 hinsichtlich dieser Drehungen unbeweglich ist und gegenüber dem sich das Dämpferelement 8 nur axial verschiebt, aber nicht dreht) eine Drehung stattfindet. Wegen der Reibungskräfte des Elastomer-Rings 28 gegenüber dem Ventilkörper 10 einerseits und dem Einstellelement 12 andererseits dreht sich der Ventilkörper 10 relativ zu dem Achsteil 7, wenn die entsprechenden (zu dämpfenden) Bewegungen auftreten. Insoweit bildet die beschriebene Anlage zwischen der nach rechts weisenden und radial äußeren Stirnfläche des Kragens 30 und der Stirnfläche des Achsteils 7 gewissermaßen ein Drehlager. Der erfindungsgemäße Aufbau des hier beschriebenen Einwegeventils aus dem Ventilkörper 10 einerseits und dem davon getrennten Elastomer-Ring 28 andererseits erlaubt eine Optimierung des Ventilkörpers 10 für (unter anderem) diese Beanspruchung, wohingegen der Elastomer-Ring 28 von solchen Beanspruchungen unabhängig optimiert werden kann.

Insbesondere kann es sich bei dem Elastomer-Ring 28 um einen einfachen O-Dichtungsring aus geeignetem Elastomermaterial handeln. Insoweit ist nur der Ventilkörper 10 ein in diesem Sinn spezifisches Bauteil.

Bei dieser Gelegenheit sei kurz angemerkt, dass die beiden weiteren O- bzw. Dichtungsringe 11 und 14 an sich konventionellen Dichtungsaufgaben dienen, nämlich einerseits zwischen dem ersten Dämpferelement 13 und dem Gehäuse 5 und andererseits zwischen ersterem und dem Einstellelement 12, vergleiche die Figuren.

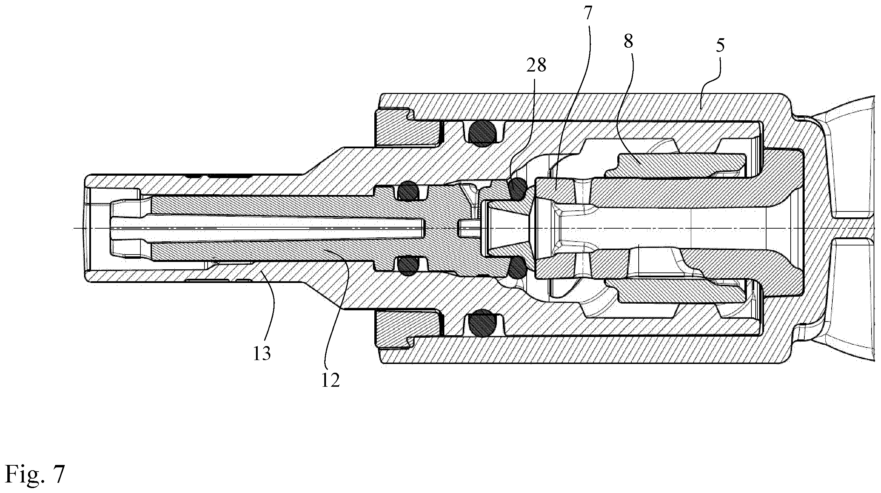

Der Vergleich der Figuren 5-7 zeigt, dass sich das zweite Dämpferelement 8 zunehmend über die Durchtrittsöffnung 22 schiebt und der verfügbare Strömungsquerschnitt für das Dämpfungsmedium von Figur 5 zu Figur 6 bereits erheblich eingeschränkt worden ist und von Figur 6 zu Figur 7 noch stärker eingeschränkt wird. In dem Zustand gemäß Figur 8 ist der Strömungsquerschnitt am kleinsten, wobei hier auch das Ende der Drehbewegungsstrecke erreicht ist.

Dieser Zusammenhang führt dazu, dass die Bewegung des Garniturteils 2 oder 3 in ihrer Schlussphase zunehmend gedämpft wird. Der Benutzer kann also den Toilettensitz 3 oder den Toilettendeckel 2 ohne großen Widerstand aus der horizontalen Position nach hinten kippen und am Ende loslassen, wobei dieser dann gebremst wird, um das Anschlagen möglichst sanft zu gestalten.

In diesem Zusammenhang wird auch auf Figur 11 und die weiter unten folgende kurze Erläuterung dazu verwiesen, gemäß der sich an die Öffnung 22 nach rechts eine kleine Vertiefung anschließt, die in Figur 5-8 nicht gut zu erkennen ist.

Im vorliegenden Fall beträgt übrigens die maximale Gesamterstreckung der Drehbewegung in dem Dämpfer etwa 120°. Diese setzen sich zusammen aus 90° für die Bewegung aus der Horizontalen in die Vertikale, weitere typische 10° für eine Überkippung des Garniturteils nach hinten in eine stabile Lage (z. B. Anlage gegen die Wand bzw. des Sitzes gegen den Deckel) zuzüglich an beiden Enden 10° Puffer.

Der umgekehrte Weg kann anhand derselben Figuren erläutert werden, nur in absteigender Reihenfolge ihrer Nummerierung. Die Bewegung des zweiten Dämpferelements 8 verdrängt nun Dämpfungsmedium in dem Volumen 21 und zwängt dieses über einen Strömungsweg in Richtung zu dem Volumen 20. Nach einiger Strecke der Drehbewegung werden dabei gemäß Figur 6 die Durchtrittsöffnungen 25 zunehmend von dem zweiten Dämpfungselement 8 abgedeckt und schließlich gemäß Figur 5 gesperrt.

Wie bereits erwähnt, sperrt dabei der durch den Elastomer-O-Ring 28, der außerdem durch das Dämpfungsmedium nach innen gedrückt wird, beaufschlagte Ventilkörper 10 auch die Bypassöffnung, sodass das Dämpfungsmedium daran vorbei axial weiter nach links fließen muss, vgl. Figur 4.

Hier gibt es eine über einen gewissen Drehwinkel erstreckte Vertiefung 27 an der im Übrigen zylindrischen Außenfläche des Einstellelements 12. Durch diese Vertiefung 27 wird das Dämpfungsmedium in die trichterartige Verbreiterung 18 in dem Einstellelement 12 gedrückt, von der aus das Dämpfungsmedium radial nach innen in den bereits früher beschriebenen Kanalabschnitt 24 fließt.

Von diesem Kanalabschnitt 24 aus strömt das Dämpfungsmedium dann in den axialen Teil 23 des Strömungswegs innerhalb des Achsteils 7. Aus dem zentralen Strömungswegteil 23 in dem Achsteil 7 kann das Strömungsmedium mit umgekehrter Strömungsrichtung, aber im Übrigen wie zuvor beschrieben zwischen dem zweiten Dämpferelement 8 und dem Achsteil 7 hindurchtreten, nachdem es die Durchtrittsöffnung 22 passiert hat, wobei die entsprechende Dämpfung dort mit der Bewegung des zweiten Dämpferelements 8 nach links immer schwächer wird.

Diese Bewegungsrichtung entspricht einer Absenkbewegung, und in der Schlussphase ist diese stärker gedämpft. In diesem Zusammenhang ist auch zu berücksichtigen, dass die Wirksamkeit der Gewichtskraft bei der Absenkbewegung zunimmt. Wegen des Gewichts der Garniturteile ist dabei die Einstellbarkeit (vgl. unten) besonders relevant.

Bei der Anhebebewegung wird vor allem der letzte Teil stark gedämpft, wie gerade beschrieben, um das Anschlagen insbesondere des Toilettendeckels 2 an der Wand oder einem Spülkasten möglichst sanft zu gestalten. Hier ist dann nämlich auch kein Elastomerpuffer mehr vorgesehen, wie ihn ausweislich Figur 1 der Toilettendeckel 2 zum Anschlag auf dem Toilettensitz 3 am Ende der Absenkbewegung trägt (und analog der Toilettensitz 3 an seiner Unterseite zum Anschlag auf den Toilettenkörper 1).

Bei der obigen Erläuterung wurde entgegen den Abbildungen 3-9 eine Konstanz der Verhältnisse zwischen dem ersten Dämpferelement 13 und dem Einstellelement 12 vorausgesetzt, was dem tatsächlichen Betrieb auch entspricht. Das Einstellelement 12 ist nämlich durch einen in Figur 2 gut erkennbaren stirnseitigen Eingriff für ein Werkzeug und eine entsprechende Öffnung in der Stirnseite des ersten Dämpferelements 13 relativ zu diesem drehbar. Diese Drehbarkeit ist durch die Anlageflächen dazwischen und vor allem den Dichtungsring 11 etwas schwergängig, sodass ohne Werkzeugeingriff keine Verstellung erfolgt.

Im Vergleich der Figuren 3-9, insbesondere 5-8, ist aber das Einstellelement 12 relativ zu dem ersten Dämpferelement 13 in verschiedenen Positionen gezeigt. Das ergibt sich einfach daraus, dass das Einstellelement 12 in den Figuren immer in der gleichen Schnittebene dargestellt ist und die Elemente 5-8 auch, wohingegen das erste Dämpferelement 13 gemäß den obigen Schilderungen gedreht wird.

Bei der in den Figuren 5-8 dargestellten Relativdrehung zwischen dem Einstellelement 12 und dem Dämpferelement 13 wird die von der erkennbaren Ausnehmung in der Innenmantelfläche des Dämpferelements 12 überdeckte Breite der Vertiefung 27 verändert. Diese Breite nimmt von der Verbreiterung 18 aus in Umfangsrichtung ab (Figur 10). Die Grenzen der erwähnten Ausnehmung bilden die eingangs erwähnte Abdeckkante. Dementsprechend kann also mit einer analogen Drehung des Einstellelements 12 relativ zu dem ersten Dämpferelement 13 der Strömungswiderstand an dieser Stelle verstellt werden, was bei der Absenkbewegung in deren Schlussphase entscheidend wird. Dann ist nämlich im Unterschied zur Anhebebewegung das Ventil in Form des Ventilkörpers 10 und des Elastomerrings 28 geschlossen und muss das Dämpfungsmedium damit durch diese Engstelle passieren.

Hierbei ist das Einstellelement 12 ausschließlich drehbar, also nicht wie bei einer Schraubenbewegung gleichzeitig axial veränderlich. Insbesondere ist es verliersicher aus dem beschriebenen Grund und infolge seiner aus den Figuren erkennbaren Steckmontage von innen.

Die Einstellöffnung wiederum ist die durch die Vertiefung 27 gebildete Öffnung in der ansonsten zylindrischen Außenfläche in diesem rechten Abschnitt des Einstellelements 12, die infolge der drehenden Verstellung eine veränderliche Überlappung mit der sich radial außen anschließenden Ausnehmung bildet.

Schließlich weist das Einstellelement 12 in Form der trichterförmigen Verbreiterung 18 des radial nach innen führenden Kanals darunter eine Vorratskammer für Dämpfungsmedium auf, die die eingangs beschriebenen vorteilhaften Wirkungen hat und (bei dem hinsichtlich der einstellbaren Dämpfungswirkung relevanten Bewegungssinn) der Einstellöffnung unmittelbar nachfolgt.

Die Vertiefung 27 erkennt man besonders deutlich in der Figur 10 rechts, in der das Einstellelement 12 isoliert dargestellt ist.

Die erfindungsgemäße Einstellbarkeit der Dämpfung ist nicht nur besonders einfach und robust sowie sicher gelöst. Sie kann zusätzlich auch besonders genau und über einen breiten Bereich eingestellt werden. Erfindungsgemäß kann damit eine weitreichende Anpassung an unterschiedliche Dämpfungsaufgaben, z. B. unterschiedliche Gewichte der Garniturteile 2 und 3, erfolgen, wobei vorteilhafterweise eine kleinere Zahl unterschiedlicher Dämpfungsmedien oder sogar ein und dasselbe Dämpfungsmedium Verwendung finden können.

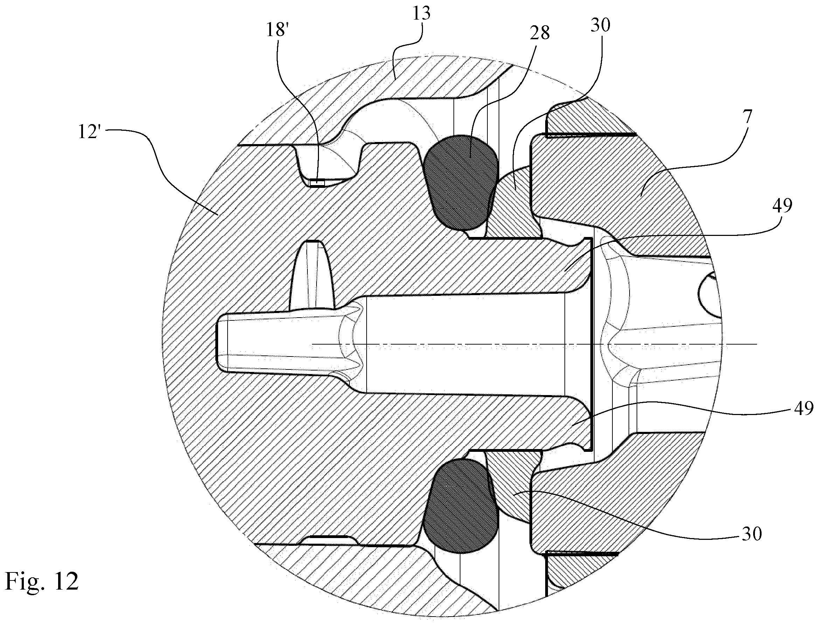

Im Folgenden wird anhand von Figur 12 noch eine alternative Ausgestaltung zum vorherigen Ausführungsbeispiel dargestellt. Figur 12 entspricht dabei im wesentlichen Figur 4 und die in den übrigen Figuren 1-11 sonst dargestellten Einzelheiten gelten sinnentsprechend auch für diese Variante. Die Änderungen betreffen also lediglich den nun mit 30 bezeichneten Ventilkörper und den rechten Teil des nun mit 12' bezeichneten Einstellelements.

Im Unterschied zu dem vorherigen Ausführungsbeispiel weist der Ventilkörper 30 nunmehr kein Rohrstück 29 auf sondern ist gewissermaßen als Ersatz hierfür ein Rohrstück 49 als Verlängerung des Einstellelements 12' vorgesehen. Ansonsten ist das Einstellelement 12' nicht wesentlich verändert und insbesondere ist die in Figur 12 scheinbar veränderte Form der trichterförmigen Verbreiterung 18 einem geringfügig anderen Schnittwinkel der Darstellung geschuldet.

Auch hier wird der Ventilkörper 30 durch den Elastomerring 28 in axialer Richtung nach rechts beaufschlagt, sodass er gegen eine nach links weisende Stirnfläche des Achsteils 7 drückt. Andererseits ist der Elastomerring 28 gewissermaßen eingeklemmt zwischen einer dazu abgewandten weiteren Stirnfläche des Ventilkörpers 30 und einer Fläche des Einstellelements 12', die das Rohrstück 49 umgibt. Die Bypassöffnung funktioniert wie beim vorherigen Ausführungsbeispiel durch ein Drücken des Ventilkörpers 30 nach links. Sie bildet sich dann zwischen diesem und der Stirnfläche des Achsteils 7. Ansonsten gelten die vorstehenden Erläuterungen.

## Patentansprüche

1. Dämpfer für eine Drehbewegung, insbesondere von Toilettendeckeln (2) oder -sitzen (3), um eine Drehachse, mit
einem viskosen Dämpfungsmedium,
zwei relativ zueinander beweglichen Dämpferelementen (8, 13),
deren Relativbewegung zu einer Verdrängung des Dämpfungsmediums führt und das Dämpfungsmedium durch einen Strömungsweg drängt, und einem in einem Strömungsweg des Dämpfungsmediums vorgesehenen Ventilelement, das strömungsrichtungsabhängig von dem Dämpfungsmedium bewegt werden kann und damit strömungsrichtungsabhängig eine zur Verringerung des Gesamtströmungswiderstands des Dämpfungsmediums vorgesehene Bypassöffnung in einer der Strömungsrichtungen des Dämpfungsmediums mehr und in der anderen Strömungsrichtung weniger freigibt,
**dadurch gekennzeichnet, dass** das Ventilelement ein strömungsrichtungsabhängig beweglicher Ventilkörper (10, 30) ist und durch ein separat zu dem Ventilelement vorgesehenes Federelement (28) elastisch beaufschlagt ist.

2. Dämpfer nach Anspruch 1, zusätzlich mit einem drehbaren Einstellelement (12, 12`) zum Einstellen eines Strömungsquerschnitts in dem Strömungsweg, welches Einstellelement (12, 12') eine durch seine Drehung verfahrbare und in dem Strömungsweg angeordnete Einstellöffnung aufweist.

3. Dämpfer nach Anspruch 2, bei dem die Einstellöffnung in einem Bereich des Strömungswegs des Dämpfungsmediums zwischen einem durch die Verschiebung eines (8) der Dämpferelemente veränderten Volumen (21) und einem zentrischen axialen Teil (23) des Strömungswegs zwischen diesem Volumen (21) und einem gegenläufig zu diesem Volumen (21) durch die Verschiebung des einen Dämpferelements (8) veränderten Volumen (20) ist, wobei die beiden veränderten Volumina (20, 21) beidseits des einen Dämpferelements (8) liegen und von dem Dämpfungsmedium eingenommen werden.

4. Dämpfer nach einem der vorstehenden Ansprüche, bei dem ein erstes (13) der Dämpferelemente (8, 13) einen ersten Teil in einem Gehäuse (5) und einen zweiten Teil außerhalb des Gehäuses (5) aufweist und mit dem ersten und dem zweiten Teil relativ zu dem Gehäuse (5) um die Drehachse drehbar ist,
ein zweites (8) der Dämpferelemente (8, 13) bezüglich Drehungen um die Drehachse fest mit dem Gehäuse (5) gekoppelt und mit dem ersten Dämpferelement (13) mittels eines Gewindeeingriffs so gekoppelt ist,
dass eine Drehung des ersten Dämpferelements (13) relativ zu dem Gehäuse (5) zu einer axialen Verschiebung des zweiten Dämpferelements (8) relativ zu dem ersten Dämpferelement (13) und der Verdrängung des Dämpfungsmediums in dem Gehäuse (5) durch das zweite Dämpferelement (8) führt,
wobei vorzugsweise ein für den Gewindeeingriff vorgesehenes Formelement (9) des zweiten Dämpferelements (8) und ein für den Gewindeeingriff vorgesehenes Formelement des ersten Dämpferelements (13) jeweils Gewindeabschnitte sind, die miteinander in Eingriff stehen.

5. Dämpfer nach einem der vorstehenden Ansprüche, bei dem das den Ventilkörper (10, 30) beaufschlagende Federelement (28) ein Elastomerfederelement ist, vorzugsweise ein Elastomerring.

6. Dämpfer nach Anspruch 2, optional kombiniert mit einem weiteren der vorstehenden Ansprüche, bei dem der Ventilkörper (10) ein Rohrstück (29) aufweist, mit welchem Rohrstück er in eine Kanalöffnung des Einstellelements (12) eingreift, welche Kanalöffnung mit der Einstellöffnung des Einstellelements (12) kommuniziert, wobei der Ventilkörper (10) mittels des Rohrstücks (29) in dem Einstellelement (12) beweglich gehalten ist, der Ventilkörper (10) eine Durchgangsöffnung aufweist und diese Durchgangsöffnung über die Kanalöffnung des Einstellelements (12) ebenfalls mit der Einstellöffnung kommuniziert, und der so gebildete Strömungspfad durch eine Anlage des Ventilkörpers (10) an einer Gegenfläche abgedichtet werden kann.

7. Dämpfer nach Anspruch 2, optional kombiniert mit einem weiteren der vorstehenden Ansprüche 3-5, bei dem das Einstellelement (12`) ein Rohrstück (49) aufweist, mit welchem Rohrstück es in eine Durchgangsöffnung des Ventilkörpers (30) eingreift, und das Rohrstück (49) mit der Einstellöffnung des Einstellelements (12`) kommuniziert, wobei der so gebildete Strömungspfad durch eine Anlage des Ventilkörpers (30) an einer Gegenfläche abgedichtet werden kann und wobei der Ventilkörper (30) auf dem Rohrstück (49) beweglich gehalten ist.

8. Dämpfer nach Anspruch 5 und 6, bei dem das Elastomerfederelement (28) zwischen einer relativ zu der Durchgangsöffnung äußeren Fläche des Ventilkörpers (10) und einer Fläche des Einstellelements (12), vorzugsweise einer die Kanalöffnung des Einstellelements (12) umgebenden Stirnfläche, angeordnet ist.

9. Dämpfer nach Anspruch 5 und 7, bei dem das Elastomerfederelement (28) zwischen einer Stirnfläche des Ventilkörpers (30) und einer dieser in Axialrichtung gegenüberliegenden und das Rohrstück (49) umgebenden Fläche des Einstellelements (12`) angeordnet ist.

10. Dämpfer nach einem der vorstehenden Ansprüche, bei dem der Ventilkörper (10, 30) mit einer Dichtfläche an einer Gegenfläche anliegt, wobei bei den Relativbewegungen der Dämpferelemente (8, 13) entsprechende Relativbewegungen zwischen dem Ventilkörper (10, 30) und der Gegenfläche stattfinden.

11. Dämpfer nach Anspruch 6 und 10, optional in Kombination mit Anspruch 8, bei dem die Dichtfläche eine von dem Rohrstück (29) abgewandte Fläche des Ventilkörpers (10) ist, vorzugsweise an einem gegenüber dem Rohrstück verbreiterter Kragen des Ventilkörpers (10).

12. Dämpfer nach Anspruch 7 und 10, optional in Kombination mit Anspruch 9, bei dem die Dichtfläche eine von der Stirnfläche des Ventilkörpers (30) abgewandte Fläche des Ventilkörpers (30) ist, vorzugsweise eine dazu entgegengesetzte weitere Stirnfläche des Ventilkörpers (30).

13. Dämpfer nach einem der Ansprüche 6-12, bei dem die Gegenfläche eine dem Ventilkörper (10, 30) und vorzugsweise auch dem Einstellelement (12, 12`) zugewandte Stirnfläche eines zumindest teilweise in den Dämpferelementen (8, 13) aufgenommenen Achsteils (7) ist.

14. Dämpfer nach Anspruch 2, optional in Kombination mit einem der Ansprüche 3-13 und 12, bei dem der Ventilkörper (10, 30) und das Elastomerfederelement (28) bei den Relativbewegungen zwischen den Dämpferelementen (8, 13) relativ zu dem Einstellelement (12, 12`) unbeweglich sind.

15. Toilettengarnitur mit einem Toilettendeckel (2) und/oder einem Toilettensitz (3) zur Montage auf einer Toilette (1) und mit mindestens einem Dämpfer nach einem der Ansprüche 1 bis 14.

## Geänderte Patentansprüche

### Geänderte Patentansprüche gemäss Regel 137(2) EPÜ.

1. Drehdämpfer für eine Drehbewegung, insbesondere von Toilettendeckeln (2) oder -sitzen (3), um eine Drehachse, mit
einem viskosen Dämpfungsmedium,
zwei relativ zueinander beweglichen Dämpferelementen (8, 13),
deren Relativbewegung zu einer Verdrängung des Dämpfungsmediums führt und das Dämpfungsmedium durch einen Strömungsweg drängt, und einem in einem Strömungsweg des Dämpfungsmediums vorgesehenen Ventilelement, das strömungsrichtungsabhängig von dem Dämpfungsmedium bewegt werden kann und damit strömungsrichtungsabhängig eine zur Verringerung des Gesamtströmungswiderstands des Dämpfungsmediums vorgesehene Bypassöffnung in einer der Strömungsrichtungen des Dämpfungsmediums mehr und in der anderen Strömungsrichtung weniger freigibt, und mit einem drehbaren Einstellelement (12, 12') zum Einstellen eines Strömungsquerschnitts in dem Strömungsweg, welches Einstellelement (12, 12') eine durch seine Drehung verfahrbare und in dem Strömungsweg angeordnete Einstellöffnung aufweist,
**dadurch gekennzeichnet, dass** das Ventilelement ein strömungsrichtungsabhängig beweglicher Ventilkörper (10, 30) ist und durch ein separat zu dem Ventilelement vorgesehenes Federelement (28) elastisch beaufschlagt ist.

2. Drehdämpfer nach Anspruch 1, bei dem die Einstellöffnung in einem Bereich des Strömungswegs des Dämpfungsmediums zwischen einem durch die Verschiebung eines (8) der Dämpferelemente veränderten Volumen (21) und einem zentrischen axialen Teil (23) des Strömungswegs zwischen diesem Volumen (21) und einem gegenläufig zu diesem Volumen (21) durch die Verschiebung des einen Dämpferelements (8) veränderten Volumen (20) ist, wobei die beiden veränderten Volumina (20, 21) beidseits des einen Dämpferelements (8) liegen und von dem Dämpfungsmedium eingenommen werden.

3. Drehdämpfer nach einem der vorstehenden Ansprüche, bei dem ein erstes (13) der Dämpferelemente (8, 13) einen ersten Teil in einem Gehäuse (5) und einen zweiten Teil außerhalb des Gehäuses (5) aufweist und mit dem ersten und dem zweiten Teil relativ zu dem Gehäuse (5) um die Drehachse drehbar ist,
ein zweites (8) der Dämpferelemente (8, 13) bezüglich Drehungen um die Drehachse fest mit dem Gehäuse (5) gekoppelt und mit dem ersten Dämpferelement (13) mittels eines Gewindeeingriffs so gekoppelt ist,
dass eine Drehung des ersten Dämpferelements (13) relativ zu dem Gehäuse (5) zu einer axialen Verschiebung des zweiten Dämpferelements (8) relativ zu dem ersten Dämpferelement (13) und der Verdrängung des Dämpfungsmediums in dem Gehäuse (5) durch das zweite Dämpferelement (8) führt,
wobei vorzugsweise ein für den Gewindeeingriff vorgesehenes Formelement (9) des zweiten Dämpferelements (8) und ein für den Gewindeeingriff vorgesehenes Formelement des ersten Dämpferelements (13) jeweils Gewindeabschnitte sind, die miteinander in Eingriff stehen.

4. Drehdämpfer nach einem der vorstehenden Ansprüche, bei dem das den Ventilkörper (10, 30) beaufschlagende Federelement (28) ein Elastomerfederelement ist, vorzugsweise ein Elastomerring.

5. Drehdämpfer nach einem der vorstehenden Ansprüche, bei dem der Ventilkörper (10) ein Rohrstück (29) aufweist, mit welchem Rohrstück er in eine Kanalöffnung des Einstellelements (12) eingreift, welche Kanalöffnung mit der Einstellöffnung des Einstellelements (12) kommuniziert, wobei der Ventilkörper (10) mittels des Rohrstücks (29) in dem Einstellelement (12) beweglich gehalten ist, der Ventilkörper (10) eine Durchgangsöffnung aufweist und diese Durchgangsöffnung über die Kanalöffnung des Einstellelements (12) ebenfalls mit der Einstellöffnung kommuniziert, und der so gebildete Strömungspfad durch eine Anlage des Ventilkörpers (10) an einer Gegenfläche abgedichtet werden kann.

6. Drehdämpfer nach einem der vorstehenden Ansprüche 2-4, bei dem das Einstellelement (12') ein Rohrstück (49) aufweist, mit welchem Rohrstück es in eine Durchgangsöffnung des Ventilkörpers (30) eingreift, und das Rohrstück (49) mit der Einstellöffnung des Einstellelements (12') kommuniziert, wobei der so gebildete Strömungspfad durch eine Anlage des Ventilkörpers (30) an einer Gegenfläche abgedichtet werden kann und wobei der Ventilkörper (30) auf dem Rohrstück (49) beweglich gehalten ist.

7. Drehdämpfer nach Anspruch 4 und 5, bei dem das Elastomerfederelement (28) zwischen einer relativ zu der Durchgangsöffnung äußeren Fläche des Ventilkörpers (10) und einer Fläche des Einstellelements (12), vorzugsweise einer die Kanalöffnung des Einstellelements (12) umgebenden Stirnfläche, angeordnet ist.

8. Drehdämpfer nach Anspruch 4 und 6, bei dem das Elastomerfederelement (28) zwischen einer Stirnfläche des Ventilkörpers (30) und einer dieser in Axialrichtung gegenüberliegenden und das Rohrstück (49) umgebenden Fläche des Einstellelements (12') angeordnet ist.

9. Drehdämpfer nach einem der vorstehenden Ansprüche, bei dem der Ventilkörper (10, 30) mit einer Dichtfläche an einer Gegenfläche anliegt, wobei bei den Relativbewegungen der Dämpferelemente (8, 13) entsprechende Relativbewegungen zwischen dem Ventilkörper (10, 30) und der Gegenfläche stattfinden.

10. Drehdämpfer nach Anspruch 5 und 9, optional in Kombination mit Anspruch 7, bei dem die Dichtfläche eine von dem Rohrstück (29) abgewandte Fläche des Ventilkörpers (10) ist, vorzugsweise an einem gegenüber dem Rohrstück verbreiterter Kragen des Ventilkörpers (10).

11. Drehdämpfer nach Anspruch 6 und 9, optional in Kombination mit Anspruch 8, bei dem die Dichtfläche eine von der Stirnfläche des Ventilkörpers (30) abgewandte Fläche des Ventilkörpers (30) ist, vorzugsweise eine dazu entgegengesetzte weitere Stirnfläche des Ventilkörpers (30).

12. Drehdämpfer nach einem der Ansprüche 5-11, bei dem die Gegenfläche eine dem Ventilkörper (10, 30) und vorzugsweise auch dem Einstellelement (12, 12') zugewandte Stirnfläche eines zumindest teilweise in den Dämpferelementen (8, 13) aufgenommenen Achsteils (7) ist.

13. Drehdämpfer nach einem der vorstehenden Ansprüche und Anspruch 11, bei dem der Ventilkörper (10, 30) und das Elastomerfederelement (28) bei den Relativbewegungen zwischen den Dämpferelementen (8, 13) relativ zu dem Einstellelement (12, 12') unbeweglich sind.

14. Toilettengarnitur mit einem Toilettendeckel (2) und/oder einem Toilettensitz (3) zur Montage auf einer Toilette (1) und mit mindestens einem Drehdämpfer nach einem der Ansprüche 1 bis 13.
